# EUROPEAN PATENT APPLICATION

(11) **EP 1 102 505 A2**
(43) Date of publication of application: **23.05.2001**
(21) Application number: 00125427.5
(22) Date of filing: 20.11.2000
(51) Int. Cl.: H04Q 7/38

(54) **Method for negotiating communication service between base station and mobile station in mobile communication system**

(30) Priority: 20.11.1999 KR 9951758
(71) Applicant: SAMSUNG ELECTRONICS Co. Ltd., Kyungki-do, Seoul (KR)
(72) Inventor: Park, Ji-Hoon, Sungnam-shi, Kyonggi-do (KR)
(74) Representative: Grünecker, Kinkeldey, Stockmair & Schwanhäusser Anwaltssozietät

(57) **Abstract**

Disclosed is a method for service negotiation between a base station and a mobile station in a mobile communications system. The method comprises the steps of transmitting, in the base station, channel assignment messages to the mobile station, and transmitting service request messages in accordance with service options, transmission velocity and multiplex options; transmitting, in the mobile station, service response messages in its own allowable maximum value; transmitting, in the base station, service connection messages; transmitting, in the mobile station, service connection end messages; and performing, in the base station, communications with the mobile station by connecting communication channels in service configuration decided by the service negotiation in accordance with the service request and the response.

## Description

The present invention relates generally to a method for negotiating a communication service between a base station and a mobile station in a mobile communication system, and in particular, to a method for negotiating a communication service between a base station and a mobile station in a process of performing a data service.

In general, service negotiation is conducted in a mobile communication system before starting a call processing between a base station and a mobile station. The service negotiation is essentially necessary for performing communication services between the base station and the mobile station in the same manner.

Service attributes to be negotiated, referred to as service configuration, consist of transmission velocity, multiplex options, and service options. Transmission velocity of existing PCS systems or cellular systems has either 9,600 [bps] or 14,400 [bps]. Accordingly, multiplex options have the value of 1 in case the transmission velocity is 9,600 [bps], while the value of 0 in case the transmission velocity is 14,400 [bps]. Service options are, for example, classified into an enhanced varable rate codec (EVRC), a qualcomm-code excited linear predication (Q-CELP), etc. in case of voice communications. The service options are also classified into an asynchronous data service, a group 3 FAX service, etc. in case of data communications. The transmission velocity and multiplex options of these existing systems are determined depending on their system options, and hence only the service options are negotiated, to complete overall service negotiation. As a result, the actual service negotiation is conducted in a simple process.

However, the current IS-95B standard does not disclose the above service negotiation method. Therefore, if services are performed over one or more channels or different transmission velocity is required for services, the service negotiation becomes disadvantageously complicated.

It is, therefore, the object of the present invention to provide a method for service negotiation between a base station and a mobile station in a mobile communication system.

The above object is solved by the subject-matters of the independent claims.

Preferred embodiments are the subject-matters of the dependent claims.

According to an aspect of the present invention, there is provided a method for efficient and prompt service negotiation between a base station and a mobile station in a mobile communication system.

According to another aspect of the present invention, there is provided a method for prompt service negotiation between a base station and a mobile station in a mobile communication system in accordance with service options, transmission velocity and multiplex options.

To achieve the above object, there is provided a method for service negotiation between a base station and a mobile station in a mobile communication system according to a preferred embodiment of the present invention. The method comprises the steps of transmitting, in the base station, channel assignment messages to a mobile station and then transmitting service request messages in accordance with service options, transmission velocity and multiplex options; transmitting, in the mobile station, service response messages at an allowable maximum value; transmitting, in the base station, service connection messages; transmitting, in the mobile station, service connection end messages from the base station; conducting, in the base station, communications with the mobile station over communication channels in service configuration decided by the service negotiation in accordance with the service request and the response.

To achieve the above object, according to another preferred embodiment of the present invention, there is provided a method for controlling service negotiation between a base station and a mobile station having a priority table. The method comprises the steps of: holding, in the base station, reception of the received service request messages if an incoming call is received in an idle state and channel assignment messages are received from the base station; detecting, in the mobile station, the priority table and transmitting service response messages in an allowable maximum service condition based on the service request messages; and transmitting, in the base station, service connection end messages and then operating a data communication mode.

To achieve the above object, according to still another preferred embodiment of the present invention, there is provided a method for controlling service negotiation between a base station and a mobile station having a priority table. The method comprises the steps of: detecting the priority table and transmitting service request messages, if there is a request for outgoing a call in an idle state; transmitting service connection end messages and operating a data communication mode, if service connection messages are received; holding service request messages, if channel assignment messages are received; checking the priority table and transmitting service response messages in an allowable maximum service condition based on the service request messages, if service request messages are received from the base station; and transmitting service connection end messages and then operating the data communication mode, if service connection messages are received from the base station.

The above object, features and advantages of the present invention will become more apparent from the following detailed description when taken in conjunction with the accompanying drawings, in which:
FIG. 1 is a conceptional view illustrating base stations, cells of the base stations, and mobile stations included in the cells;
FIG. 2 is a block diagram illustrating a constitution of a mobile mobile station in accordance with the present invention;
FIG. 3 is a view illustrating state transition of a mobile communication mobile station;
FIG. 4 is a flow chart illustrating a control process for data service negotiation in a mobile communication mobile station according to a preferred embodiment of the present invention; and
FIG. 5 is a flow chart illustrating signals generated during service negotiation between a mobile station and a base station while a call processing is being performed based on a data service according to a preferred embodiment of the present invention.

Preferred embodiments of the present invention will be described herein below with reference to the accompanying drawings. In the following description, well-known functions or constructions are not described in detail since they would obscure the invention in unnecessary detail.

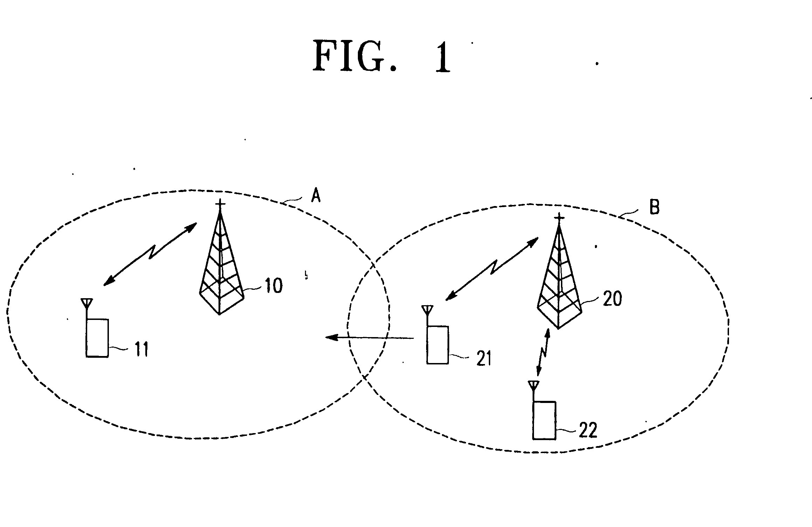

FIG. 1 is a conceptional view illustrating base stations, cells of the base stations and mobile stations included in the cells. Service negotiation between a base station and a mobile station will be described herein below with reference to FIG. 1.

A first base station 10 has its own electric wave region A to conduct wireless voice or data communications with a mobile station 11 positioned within the electric wave region A. A second base station 20 has its own electric wave region B adjacent to the first base station 10 to conduct voice or data communications with each mobile station 21 and 22 positioned within the electric wave region B Further, the each mobile station can conduct voice or data communications while moving from/to the electric wave regions of the base stations. For example, the mobile station 21 positioned within the electric wave region B of the second base station 20 moves to other electric wave region A in FIG. 1. If the moving mobile station 21, in this case, is to perform data communications and maximum data velocity values allowed by the respective base stations are different from each other, another novel service negotiation is required to be performed.

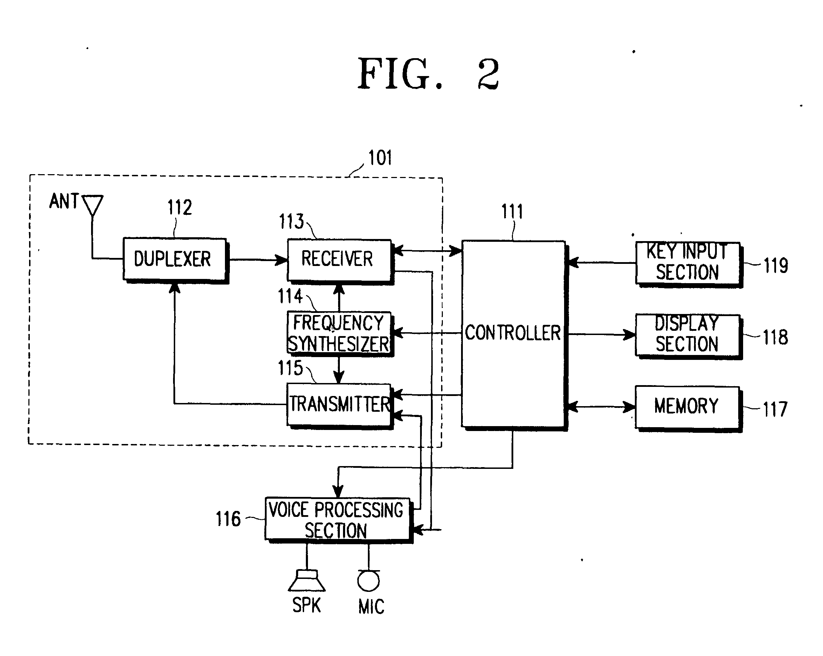

FIG. 2 is a block diagram illustrating a constitution of a mobile communication mobile station in accordance with the present invention. The constitution and operation of the mobile communication mobile station according to the present invention will be described in detail herein below with reference to FIG. 2.

A controller 111 performs an overall control of the mobile communication mobile station, and particularly in case of data communications, performs service negotiation with a base station with respect to a rate set based on transmission velocity, multiplex options, service options, etc. A duplexer 112 transmits radio signals received from an antenna ANT to a receiver 113, while transmitting radio signals received from a transmitter 115 through the antenna ANT in a public wave. The receiver 113 converts the very signals, corresponding to channels of a frequency band pre-set by the controller 111 among radio signals received from the duplexer 112, into base band signals or data. The transmitter 115 converts the base band signals or data into a frequency to be transmitted under the control of the controller 111, to output the converted signals or data to the duplexer 112. A frequency synthesizer 114 generates a frequency to be outputted to the receiver 113 and a frequency to be outputted to the transmitter 115 under the control of the controller 111. The antenna ANT, the duplexer 112, the receiver 113, the frequency synthesizer 114 and the transmitter are referred to as a radio section 101 in a general term.

A voice processing section 116 decodes encoded signals of the base band received from the receiver 113 to output the same to a speaker SPK, while encoding signals received from a microphone MIC to output the same to the transmitter 115. The speaker SPK outputs decoded and inputted electric signals into audible sounds. The microphone MIC converts the audible sounds into electric signals to output the same to the voice processing section 116. A memory 117 includes a region for storing data necessary for a mobile station control, another region for temporarily storing data generated during the control process, and further another region for storing data generated according to additional functions, i.e., short dialing, short messages, etc. Further, the memory 117 has a priority table in accordance with transmission velocity as shown in TABLE 1 according to the present invention.

**[TABLE 1]**

| Priority | Bit transmission rate [Kbps] x number of channels | Transmission velocity [Kbps] |
|---|---|---|
| 1 | 14.4 x 8 | 115.2 |
| 2 | 14.4 x 7 | 100.8 |
| 3 | 14.4 x 6 | 86.1 |
| 4 | 9.6 x 8 | 76.8 |
| 5 | 14.4 x 5 | 72 |
| 6 | 9.6 x 7 | 67.2 |
| 7 | 14.4 x 4 | 57.6 |
| 8 | 9.6 x 6 | 57.6 |
| 9 | 9.6 x 5 | 48 |
| 10 | 14.4 x 3 | 43.2 |
| 11 | 9.6 x 4 | 38.4 |
| 12 | 14.4 x 2 | 28.8 |
| 13 | 9.6 x 3 | 28.8 |
| 14 | 9.6 x 2 | 19.2 |
| 15 | 14.4 x 1 | 14.4 |
| 16 | 9.6 x 1 | 9.6 |

As shown in TABLE 1, 7^{th} and 8^{th}, or 12^{th} and 13^{th} priorities have the same transmission velocity, respectively. However, the priority ranking is determined to be higher when the number of channels is smaller. Also, each mobile station, on the basis of the TABLE 1, can have only regions below the 5^{th} priority, with no necessity for having all the regions in the TABLE 1, in accordance with characteristics of the radio section and mobile station specifications. Further, the mobile station may have a table in a form that the transmission velocity 14.4 [Kbps] is not allowable. Mobile station set manufacturing companies can optionally apply these variables. The TABLE 1 has been prepared to have eight number of channels to the maximum on the basis of the IS-95B standard. Further, the exemplary transmission velocity is limited to 9.6 [Kbps] and 14.4 [Kbps] in the TABLE 1. However, if another transmission velocity than the both is possible in IMT-20000 or the like, the table can also be prepared to include the new transmission velocity.

A display section 118 displays a current state and operation of the mobile station under the control of the controller 111, and further displays residual amounts of batteries. The display section 118 also displays pertinent data when a key is inputted. A key input section 119 having a key matrix structure, which is not drawn in FIG. 2, generates key signals corresponding to the key pressed by a user, so as to output the key signals to the controller 111. In other words, the user operates the mobile station through the display section 118 and the key input section 119.

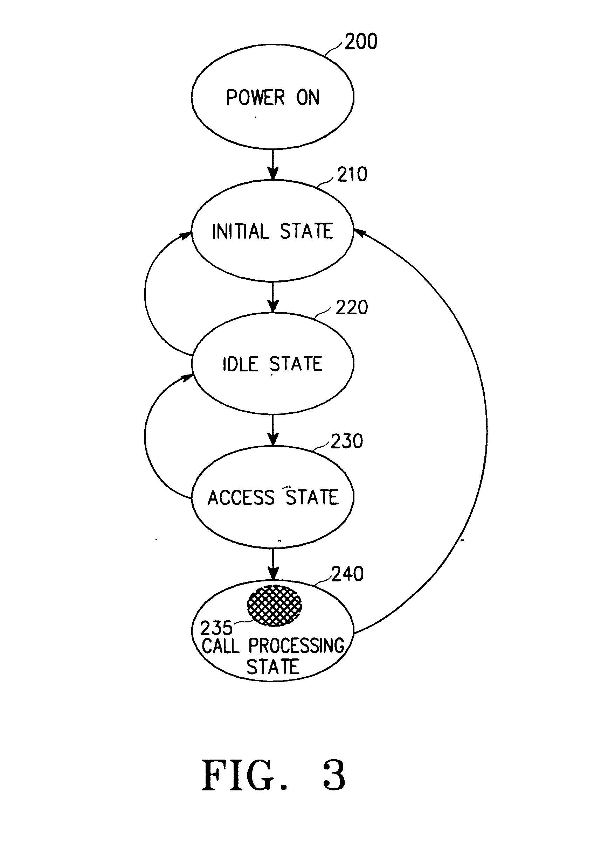

FIG. 3 is a view illustrating state transition of a mobile communication mobile station. State transition of a mobile communication mobile station and state-transited portions to be negotiated will be described herein below with reference to FIG. 3.

If a mobile station is turned on in a state 200, an initial state 210 is proceeded with. The initial state 210 receives pilot channels and synchronous channels. After completing the initial state 210, an idle state 220 is proceeded with. The idle state 229 receives paging channels in order to detect whether or not an incoming call is received. Thereafter, if a position is registered, an incoming call is received or there is a request for outgoing a call in the idle state 220, an access state 230 is proceeded with. If there is an incoming call or outgoing a call in the access state 230, a call processing state 240 is proceeded with. If a position is registered, the idle state 220 is proceeded with again. As a consequence, service negotiation is performed within a slash marked region 235 in the call process from the access state 230 toward the call processing state 240. After the service negotiation is completed, the call processing state 240 is maintained in voice or data communication mode. If the call processing comes to an end, the initial state 210 is proceeded with again.

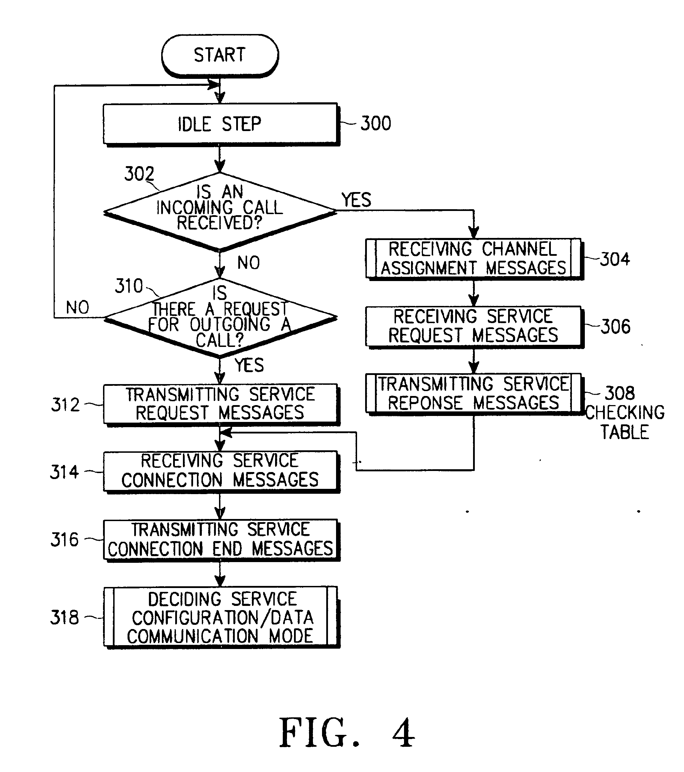

FIG. 4 is a flow chart illustrating a control process for data service negotiation in a mobile communication mobile station according to the preferred embodiment of the present invention. A method for controlling data service negotiation according to the present invention will described herein below in detail with reference to FIG. 2 to FIG. 4.

A controller 111 maintains an idle state 220 in step 300, and detects whether or not an incoming call is received in step 302. In the affirmative, step 304 is proceeded with, whereas in the negative, step 310 is proceeded with. The controller 111 detects whether or not there is a request for outgoing a call from a key input section 119 in step 310. In the affirmative, step 312 is proceeded with, but in the negative, step 300 is proceeded with. The flow chart illustrating the control process is defined to two cases when an incoming call or outgoing a call is received, with the exception of other event occurrence.

In a process from the step 302 toward the step 304, the controller 111 receives channel assignment messages from a base station. After channel setting, step 306 is proceeded with. The controller 111 receives service request messages in the step 306. Here, the service request messages received from the base station have service options, a rate set and multiplex options. First, the fact that transmission velocity and available maximum number of channels are varied depending on the rate set and the multiplex options will be described herein below with reference to TABLE 2, which is prepared based on the IS-95B standard.

**[TABLE 2]**

| Rate Set | Multiplex options | Bit rate [Kbps] x number of channels |
|---|---|---|
| 2 | 2 | 14.4 x 1 |
| | 4 | 14.4 x 2 |
| | 6 | 14.4 x 3 |
| | 8 | 14.4 x 4 |
| | 10 | 14.4 x 5 |
| | 12 | 14.4 x 6 |
| | 14 | 14.4x7 |
| | 16 | 14.4x8 |
| 1 | 1 | 9.6 x 1 |
| | 3 | 9.6 x 2 |
| | 5 | 9.6 x 3 |
| | 7 | 9.6 x 4 |
| | 9 | 9.6 x 5 |
| | 11 | 9.6x6 |
| | 13 | 9.6 x 7 |
| | 15 | 9.6x8 |

In case that a rate set has a value of 2, transmission rate is 14.4 [Kbps] and multiplex options have even integers in a range from 2 to 16. In case that a rate set has a value of 1, transmission rate is 9.6 [Kbps] and multiplex options have odd integers in a range of 1 to 15. Accordingly, the transmission velocity is determined depending on the rate set, while the number of channels is determined depending on the multiplex options.

Further, the description will be explained herein below with reference to FIG. 4. If the controller 111 receives service request messages in step 306, the controller 111 checks the priority table of a memory 117 in step 308 Say that service request messages received from base station have a rate set of 2 and multiplex options of 16. To explain a service process based on the supposition, the priority table stored in the memory 117 is specified as like TABLE 3.

**[TABLE 3]**

| Priority | Bit transmission rate [Kbps] x number of channels | Transmission velocity [Kbps] |
|---|---|---|
| 1 | 9.6 x 8 | 76.8 |
| 2 | 9.6 x 7 | 67.2 |
| 3 | 9.6 x 6 | 57.6 |
| 4 | 9.6 x 5 | 48 |
| 5 | 9.6 x 4 | 38.4 |
| 6 | 9.6 x 3 | 28.8 |
| 7 | 9.6 x 2 | 19.2 |
| 8 | 9 6 x 1 | 9.6 |

If the priority table can transmit data only at 9.6 [Kbps] as in the TABLE 3, the rate set 2 can not be acceptable. Since the controller 111 receives the service request messages beyond its own maximum transmission velocity, therefore, the controller 111 reads data in accordance with its own maximum transmission velocity in the priority table, and then generates service response messages. The controller also transmits the generated service response messages to the base station by controlling the radio section 101. The base station receives the service response messages and transmits service connection messages to the mobile station in order to accept the service. After the controller 111 transmits the service response messages, the controller holds reception of the service connection messages. If the service connection messages are received in step 314, step 316 is proceeded with. The controller 111 transmits service connection end messages to the base station in order to notify that the service connection messages are received. Then, communications are performed in service configuration decided through the service negotiation between the base station and the mobile station in step 318. Service connection is performed in the process as above described if an incoming call is received.

Now, it will be described hereinafter the process from step 310 toward step 312 in case there is a request for outgoing a call. The controller 111 transmits service request messages in step 312. The transmitted messages require the maximum transmission velocity of the mobile station to the base station. The base station checks currently available number of channels and transmission velocity, and then transmits service connection messages to the mobile station. Therefore, the controller 111 receives the service connection messages through radio section 101. In other words, the controller 111 receives messages indicating the service requirement is accepted. The controller 111 transmits service connection end messages to the base station. After the base station receives the service connection end messages, data communications are performed in service configuration decided by the service negotiation.

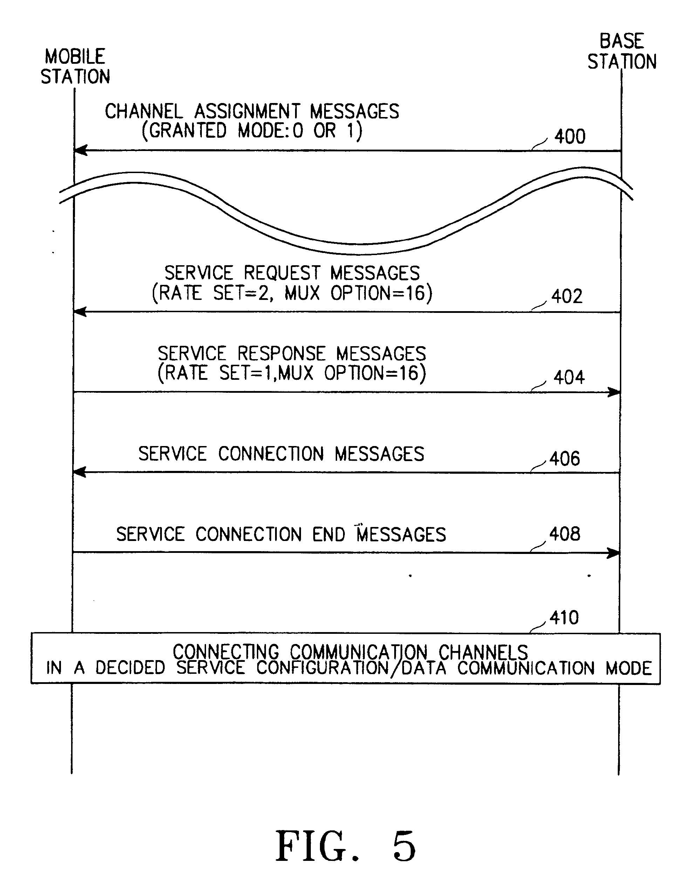

FIG. 5 is a flow chart illustrating signals generated during service negotiation between a mobile station and a base station while a call processing is being performed based on a data service according to a preferred embodiment of the present invention. Signal flow generated during the service negotiation between the mobile station and the base station will be described herein below in detail with reference to FIG. 5.

The base station transmits channel assignment messages to the mobile station in order to connect a call in step 400. Here, the transmitted messages are set to have a granted mode of 0 or 1. The case the granted mode is set to be 0 signifies that communication channels are connected by means of a default value and then the service negotiation is performed. Meanwhile, the case the granted mode is set to be I signifies that communication channels are connected with service configuration required by the mobile station and then the service negotiation is re-performed. Further, the case the granted mode is set to be 2 signifies the service configuration required by the mobile station is effectively used. The base station transmits service request messages in an assignable maximum value. Say that the transmitted service request messages have a rate set of 2 and multiplex options of 16. The mobile station receiving the service request messages transmitted from the base station checks the priority table stored in its own memory and determines whether or not the service request messages are acceptable. In the affirmative, the mobile station transmits service response messages having the same contents as the service request messages. In the negative, or if the acceptable maximum number of channels is 5 and transmission velocity of the mobile station is 14.4 [Kbps], the mobile station transmits service response messages based on the determination. As a consequence, the service response messages have a rate set of 2, and multiplex options of 10. If these messages are received by the base station, the base station transmits service connection messages in step 406. The mobile station transmits service connection end messages to the base station in step 408. Therefore, channels having the same service configuration between the mobile station and the base station are formed in step 410, so that data communications are able to be performed accordingly. The above process is not limited to receiving calls or outgoing calls. Hand-off, for example, can also be performed in the above process even when a mobile station moves into a base station which requires different transmission velocity or different allowable number of channels

As stated above, service negotiation is performed between a base station and a mobile station in a mobile communication system in accordance with transmission velocity and assignable number of channels, thereby advantageously conducting the service negotiation with more ease and convenience.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method for negotiating a communication service between a base station and a mobile station in a mobile communication system, the method comprising the steps of:
transmitting, in the base station, a channel assignment message to the mobile station, and transmitting a service request message in accordance with a service option, a transmission velocity and a multiplex option;
transmitting, in the mobile station, a service response message in its own allowable maximum value;
transmitting, in the base station, a service connection message;
transmitting, in the mobile station, a service connection end message; and
performing, in the base station, communications with the mobile station by connecting communication channels in service configuration decided by the service negotiation in accordance with the service request and the response.

2. The method of claim 1, wherein the channel assignment message contains a message indicating that a granted mode should be started again from a default value, or existing channels are not available.

3. The method of claim 1 or 2, wherein a communication service is negotiated whenever an incoming call is received by the mobile station or whenever there is a request for outgoing a call from the mobile station.

4. A method for controlling service negotiation between a base station and a mobile station having a priority table, the method comprising the steps of:
holding reception of the service request message, if an incoming call is received in an idle state and a channel assignment message is received from the base station;
detecting the priority table and transmitting a service response message in an allowable maximum service condition based on the service request message, if the service request message is received from the base station; and
transmitting a service connection end message and then operating a data communication mode, if a service connection message is received from the base station.

5. A method for controlling service negotiation between a base station and a mobile station having a priority table, the method comprising the steps of:
detecting the priority table and transmitting service request messages, if there is a request for outgoing a call in an idle state;
transmitting a service connection end message and operating a data communication mode, if a service connection message is received;
holding reception of the service request message, if the service request message is received from the base station;
detecting the priority table and transmitting a service response message in an allowable maximum service condition based on the service request message, if the service request message is received from the base station; and
transmitting a service connection end message and operating the data communication mode, if the service connection messages are received from the base station.
